# DEMANDE DE BREVET EUROPEEN

(11) **EP 1 065 027 A1**
(43) Date de publication de la demande: **03.01.2001**
(21) Numéro de dépôt: 99810147.1
(22) Date de dépôt: 18.02.1999
(51) Int. Cl.: B23Q 7/10

(54) **Revitailleur de barres courtes pour machine-outil**

(71) Demandeur: LNS S.A., 2534 Orvin (CH)
(72) Inventeur: Scemama, Philippe, 2525 Le Landeron (CH)
(74) Mandataire: BOVARD AG - Patentanwälte

(57) **Abrégé**

Le ravitailleur de barres courtes et d'un diamètre compris entre 6 et 120 mm pour machine-outil tel que tour ou décolleteuse, comprend un dispositif de chargement de barres comportant des éléments de retenue d'une pluralité de barres sur un plan incliné et des coulisses de chargement, un dispositif de centrage des barres selon un axe d'alignement par rapport à la machine-outil, et un dispositif d'avancement des barres dans ladite broche. Les éléments de retenue sont des doigts (42) qui ne retiennent pas seulement une barre mais qui lui offrent, au cours du chargement, une surface de support (42A, 42B), de sorte que la barre est simultanément supportée par le doigt (42) et la coulisse de chargement (28). Le ravitailleur comprend en plus un dispositif permettant l'adaptation de la position de la première barre à charger au diamètre de cette dernière lorsque la butée (66) de la course de la coulisse de chargement (28) est ajustée au diamètre de la barre.

Cette construction du ravitailleur évite tout choc de barres contre la coulisse de chargement et rend en plus la machine plus performant vu l'adaptation semi-automatique au diamètre variable des barres.

## Description

L'invention se rapporte à un ravitailleur de barres courtes pour machine-outil tel que tour ou décolleteuse, comprenant un dispositif de chargement de barres qui comporte une pluralité d'éléments de retenue arrangés en parallèle et alignés les uns aux autres pour retenir une pluralité de barres posées sur un plan incliné, et des coulisses de chargement, un dispositif de centrage des barres selon un axe d'alignement par rapport à la machine-outil, et un dispositif d'avancement des barres dans ladite broche.

Ces ravitailleurs ont pour but de ravitailler automatiquement notamment des tours automatiques en barres ce qui permet d'améliorer sensiblement le rendement de ces machines et de réduire considérablement les coûts des pièces usinées sur la machine-outil. Le terme "barre", tel qu'il est utilisé dans le présent document, comprend des pièces oblongs prismatiques d'un matériau quelconque, y compris les tubes, donc la longueur dépasse largement leur diàmètre.

Les ravitailleurs connus et leur fonctionnement ne seront pas décrits en détail plus bas. En général, les ravitailleurs comportent un bâti sur lequel est monté un magasin de barres sous forme de plan incliné, un chargeur qui reprend du magasin une barre à usiner, la centre horizontalement et la soulève, un dispositif de centrage vertical afin d'aligner la barre coaxialement à la broche du tour associé, et un dispositif d'avancement pour pousser la barre dans la broche.

Les ravitailleurs connus présentent cependant plusieurs inconvénients. Tout d'abord, et ceci est l'inconvénient le plus sérieux, l'opération de chargement s'accomplit brutalement puisque le dispositif est soumis à deux chocs successifs lors de la procédure de chargement: Le premier choc se produit lorsqu'une barre à charger, retenu dans le magasin par une série parallèle de doigts de retenue, tombe dans le chargeur lors d'un mouvement ascendant de celui-ci qui est nécessaire afin de transporter la barre d'un niveau inférieur, celui du magasin, au niveau de l'axe de la broche. Ce choc est particulièrement violent et bruyant et peut endommager certaines parts du ravitailleur. A titre indicatif, le poids d'une seule barre en acier d'un diamètre de 80 mm et d'une longueur de 1200 mm est de 47 kg environ; ces chocs peuvent provoquer à la longue un désalignement entre le ravitailleur et la poupée de la machine-outil, entraînant de graves risques et pour le ravitailleur et pour la machine-outil.

Le second choc se produit lorsqu'une barre avait été reprise du magasin et emportée par le chargeur; la prochaine barre, étant posée sur le plan incliné du magasin, va alors heurter lesdits doigts de retenue. Bien que ce choc ne soit pas dangereux pour le ravitailleur, il n'est pas moins désagréable, et il produit des vibrations qui risquent de désaligner le ravitailleur par rapport à la machine-outil.

Le but de l'invention est de créer un nouveau ravitailleur palliant ces inconvénients et permettant de réaliser des rendements encore accrus par une automatisation poussée.

Ce but est atteint par le ravitailleur selon l'invention qui est caractérisé en ce que les éléments de retenue dans le dispositif de chargement sont une pluralité de doigts de retenue arrangés en parallèle et alignés les uns aux autres, ces doigts ayant une telle forme et une telle position qu'ils continuent à retenir une barre saisie par les coulisses de chargement lorsque celles-ci font leur mouvement vertical ascendant, de manière à ce que la barre reste en contact, pendant son chargement, avec deux génératrices porteuses, situées sur le doigt de retenue et sur la coulisse de chargement, respectivement, substantiellement jusqu'à ce que la barre aura atteint sa position finale dans ledit axe d'alignement, à savoir sa position la plus haute.

Des particularités de ce ravitailleur et des caractères préférés ou spéciaux font l'objet de revendications dépendantes.

La description suivante d'un exemple d'exécution du ravitailleur selon l'invention est donnée afin de faire mieux comprendre l'invention; cet exemple n'est pas limitatif. On se référera au dessin dans lequel:
La fig. 1 est une vue en plan du ravitailleur selon l'invention,
la fig. 2 est une coupe selon la ligne Il-II dans la fig. 1,
la fig. 3 est une coupe selon la ligne III-Ill dans la fig. 1,
la fig. 4 est une coupe selon la ligne IV-IV dans la fig. 1,
la fig. 5 est un détail du ravitailleur agrandi, entouré par la ligne V dans la fig. 1, et
la fig. 6A à 6D est la représentation schématique d'un cycle de chargement d'une barre.

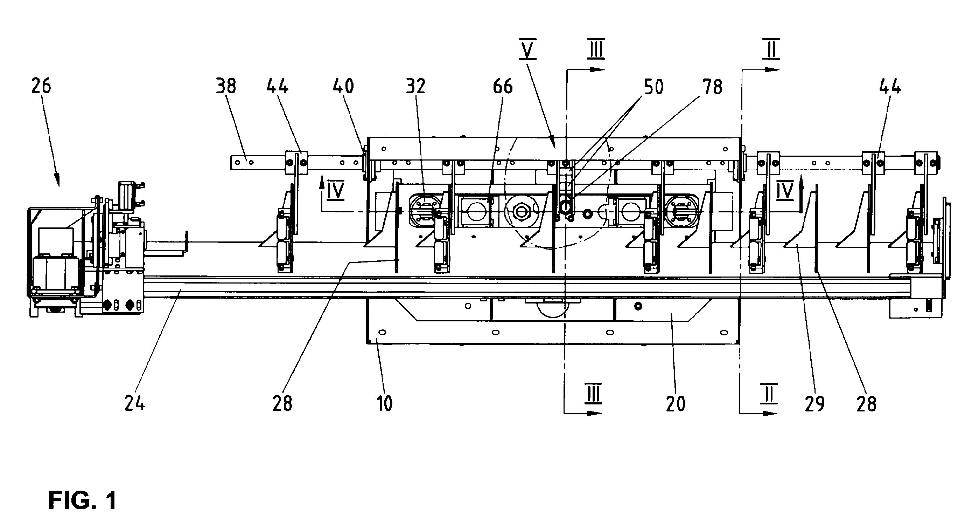

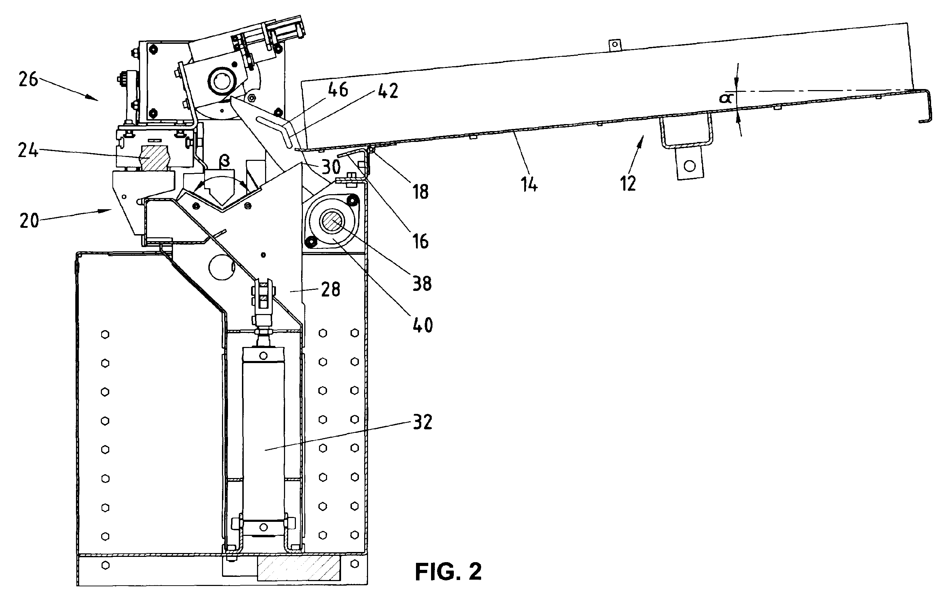

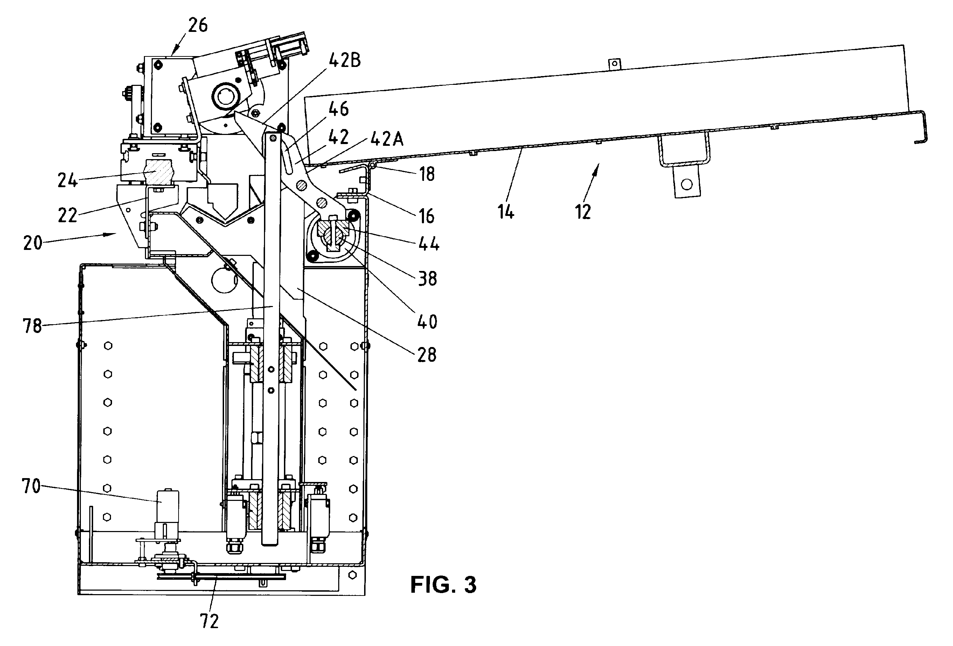

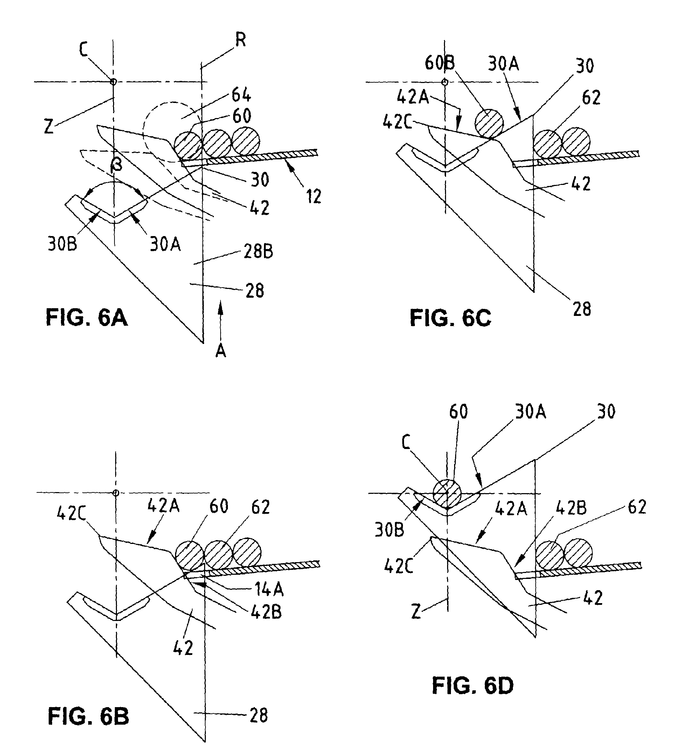

La fig. 1 montre une vue en plan un ravitailleur de l'invention selon une exécution préférée; la magasin des barres n'est pas représenté pour les raisons de clarté. On voit un socle de machine 10 qui sert de support et de boîtier aux différents éléments du ravitailleur. Un magasin 12 sous forme d'un plan 14, incliné par un angle a par rapport au plan horizontal, est monté sur une cornière horizontale 16 au moyen de charnières 18 (fig. 2 et 3); de ce fait, l'inclinaison du plan 14 est réglable. Une table 20 comportant un profil oblong 22 supporte un rail 24 sur lequel peut se déplacer un chariot 26 destiné à pousser les barres horizontalement dans la poupée de la machine-outil; étant donné que les tâches et le fonctionnement d'un tel chariot sont connus, il ne sera pas décrit en détail. En plus, la table 20 est équipée de plusieurs coulisses de chargement 28 sous forme de plaques, montées verticalement dans la table et stabilisées par des plaques horizontales soudées 29, et présentant une pointe de saisie 30 et deux arêtes 30A, 30B (fig. 6A) qui forment un grand V, ouvert vers le haut et renfermant un angle β qui est normalement, à savoir pour recevoir les barres de section circulaire ou hexagonale, de 120° environ.

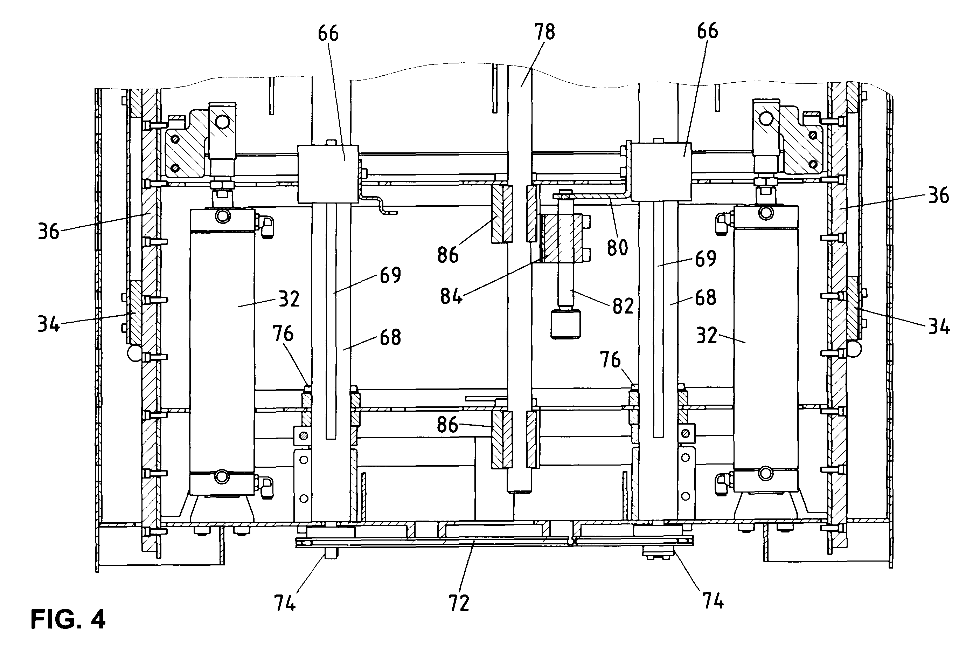

Le sommet du V de toutes les coulisses de chargement 28 se trouve exactement dans la verticale Z de l'axe passant par le centre C de la poupée de la machine-outil associée au ravitailleur (voir les fig. 6A et 6D). La table 20 peut être déplacée dans le sens vertical par deux vérins hydrauliques ou pneumatiques 32, voir les fig. 1, 2 et 4; la table est alors guidée par les glissières 34 glissant dans les rails verticaux 36 (fig. 4).

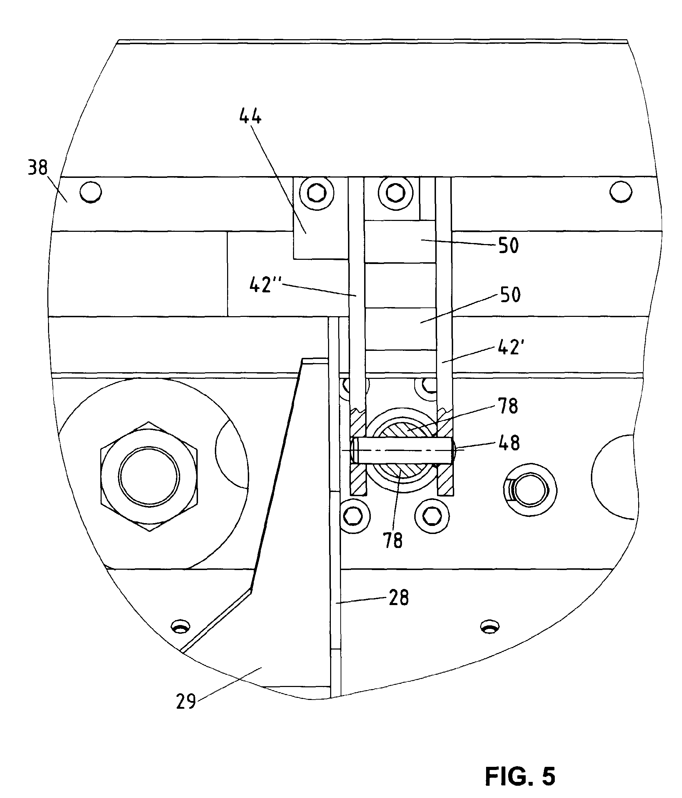

Un arbre 38 est logé dans des paliers 40 du socle 10. Une série de doigts de retenue 42 sous forme de S très allongé sont bloqués, bien alignés l'une à l'autre, sur l'arbre 38 au moyen de colliers 44, voir les fig. 1 et 3. Le doigt 42 présente deux faces (ou arêtes) actives, une face inférieure 42A et une face supérieure 42B (fig. 3 et 6D) dont les fonctions seront décrites en détail avec référence aux fig. 6A à 6D. Une fente de guidage 46 servant de voie de commande de l'inclinaison des doigts 42 par rapport à la verticale et destinée à recevoir une goupille de commande 48 (fig. 5), est pratiquée dans le doigt 42; comme on voit dans les fig. 2 et 3, cette fente 46 n'est pas droite mais a une forme courbe. Le but et le fonctionnement de cette fente seront décrits plus bas. Deux doigts médianes 42 sont rigidement connectés à peu de distance au moyen de pièces de fixation correspondantes, voir la fig. 5 où les deux doigts 42', 42" sont réunis par des entretoises 50 dont les éléments de fixation ne sont pas représentés. Dans la fig. 6, la pointe la plus haute du doigt 42 porte la référence 42C.

Comme on l'a déjà indiqué ci-dessus, la table 20 exerce un mouvement vertical afin de reprendre une barre à usiner du magasin 12. On se référera aux fig. 6A à 6D qui montrent schématiquement le cycle de chargement d'une barre 60.

Avant le début du cycle de chargement, la table 20 est au repos dans sa position la plus basse, dessinée dans les fig. 2, 3 et 6A. La table 20 commence alors un mouvement verticalement ascendant, et la pointe 30 des coulisses de chargement 28, qui sont toutes solidaires de la table 20, se glisse entre la barre 60, retenue par le doigt 42, et la prochaine barre 62 (fig. 6B). On notera que le plan 14 du magasin 12 comporte des fentes ou autres ouvertures 14A afin de permettre le passage de la coulisse 28. On voit dans la fig. 6B que la barre 60 est toujours retenue par le doigt 42, en l'occurrence par sa face 42B, et que la barre 60 ne peut pas rouler le long de l'arête 30A de la coulisse 28.

Lors de la montée continue de la coulisse 28, voir la fig. 6C, la barre est toujours en contact de roulement ou de glissement avec deux génératrices, à savoir la face 30A de la coulisse 28 et la face 42B du doigt de retenue 42. On voit que la barre 60 fait simultanément un mouvement vers le haut et un mouvement vers la gauche, à savoir depuis le magasin 12 jusque dans l'axe Z.

Finalement, la coulisse de chargement 28 continuant toujours à monter, la barre 60 se trouve à quelques millimètres de l'arête 30B, de la pointe 42C du doigt 42, et l'axe de chargement C du ravitailleur, voir la fig. 6D, et les derniers millimètres de montée ont pour effet de déposer la barre 60 contre la seconde arête 30B tout en restant en contact avec l'arête 30A, et finalement dans l'axe C. Il s'ensuit un mouvement absolument silencieux de la barre 60 depuis son point de reprise dans le magasin 12 jusqu'au point de son alignement avec l'axe longitudinal C du ravitailleur et de la machine-outil à ravitailler. Ce mouvement doux et silencieux est accompli, selon l'invention, par le fait que la barre est toujours retenue par deux génératrices.

Lorsque le ravitailleur doit travailler avec des barres d'un autre diamètre, il est nécessaire de changer le point d'appui d'une barre au doigt de retenue, parce que l'axe de reprise d'une barre R, qui est la prolongation vers le haut de l'arête arrière verticale 28B des coulisses 28, doit être situé absolument entre deux barres successives dans le magasin, à savoir que cet axe R doit constituer la tangente verticale commune de deux barres successives, voir la fig. 6A où une barre 64 ayant un plus grand diamètre est dessinée en traits pointillés.

Dans le cas de barres d'un diamètre plus grand, la position la plus haute de la table doit être modifiée, à savoir être abaissée, afin que l'axe de la barre qui est situé à plus de distance de sa surface, comparé à une barre ayant un plus petit diamètre, puisse être aligné à l'axe C. Cette position la plus haute de la table est déterminée par les butées 66 (fig. 1 et 4) qui sont solidement fixées à un écrou (non représenté) pouvant se déplacer le long d'une vis sans fin (non représentée) qui est logée dans les manchons cylindriques et verticales 68; la connexion entre les butées 66 et ledit écrou passe par la fente longitudinal 69 des manchons 68. Les vis sans fin tournant dans les manchons 68 sont entraînées par un moteur 70 (fig. 3) qui transmet sa rotation par une chaîne 72 aux roues dentées 74, fixées à l'extrémité inférieure des vis sans fin.

Lorsque des barres 64 ayant un diamètre plus grand que les barres 60 sont à charger, le moteur 70 est mis en service, et sa rotation, transmise auxdites vis sans fin, fait baisser simultanément les deux butées 66. La course de la table 20 devient donc un peu plus courte, les surfaces de butée 76 de la table touchant les butées 66 un peu plus tôt. L'opérateur du ravitailleur réglera, en faisant tourner le moteur 70 dans le sens voulu, la course de la table 20 de telle façon que le centre de la (nouvelle) barre 64 coïncide avec l'axe C de ravitaillement.

Cependant, ce réglage ne suffit pas car il faut encore adapter l'inclinaison du doigt de retenue 42 au nouveau diamètre - celui d'une barre 64 plus épaisse - afin de respecter la condition énoncée ci-dessus concernant la tangente R (fig. 6A). En l'occurrence, il faut augmenter l'inclinaison du doigt 42 par rapport à la verticale.

Selon l'invention, cette adaptation au nouveau diamètre est accomplie automatiquement lorsque la position en hauteur des butées 66 est changée. A cette fin, un dispositif de réglage (fig. 3, 4, 5) est prévu qui comprend une tige verticale 78 disposée essentiellement au milieu entre les deux butées 66 et fixée à une des butées 66 par l'intermédiaire d'une cornière 80, une vis de réglage fin 82, et d'un bloc de serrage 84. La tige de commande 78 est guidée dans la table 20 par deux cosses de guidage 86, et la tige se prolonge vers le haut jusque entre deux doigts de retenue centraux et rapprochés 42', 42" (fig. 5). Une goupille de commande 48, déjà mentionnée ci-dessus, traverse la tige 78 et entre de part et d'autre dans la fente de guidage 46 de ces deux doigts de retenue. Lorsque la position verticale des butées 66 est modifiée, par exemple vers le bas pour accommoder le ravitailleur à des barres plus épaisses, la tige de commande 78 suit cette modification et descend également; la goupille 48 entraîne alors les doigts 42', 42" également vers le bas en se déplaçant simultanément dans la fente de commande 46. Les deux doigts 42', 42", étant solidaire de l'arbre 38, tournent cet arbre qui est logé dans les paliers 40, et tous les doigts de retenue sont amenés dans une position angulaire plus basse, voir la fig. 6A où la nouvelle position du doigt 42 est représentée en traits interrompus.

La position, la forme et la longueur de la fente de commande 46 ont été calculées par un ordinateur afin que le mouvement combiné des butées 66, de la tige 78 et des doigts 42 ait toujours comme résultat la condition de reprise d'une barre représentée à la fig. 6, à savoir la position angulaire des doigts 42 par rapport au diamètre d'une barre 60, 64 et la position de la barre par rapport à la verticale R. Il va de soi qu'on puisse également obtenir les propriétés de la fente 46 par un nombre d'essais sans avoir recours à un ordinateur.

Dans le présent exemple, le ravitailleur a été construite pour s'adapter aux barres courtes, à savoir jusqu'à une longueur de 1600 mm environ, et ayant un diamètre compris entre 6 et 120 mm.

Le ravitailleur selon l'invention peut également être utilisé pour alimenter une machine-outil en barres d'une section non circulaire, par exemple carrée, hexagonale, octogonale, etc. Les seules modifications qui sont alors éventuellement nécessaires sont l'adaptation de la forme du V des coulisses de chargement (angle β), et l'inclinaison du plan incliné du magasin (angle α). Ces deux modifications sont relativement faciles et rapides à faire.

Le ravitailleur selon l'invention transporte les barres à partir du magasin 12 jusque dans l'axe C de la machine-outil sans le moindre choc, évitant ainsi un dérèglement de ajustage et des endommagements de sa propre construction. Le choc d'une barre contre les doigts de retenue entre les phases 6D et 6A, à savoir lors de la reprise du cycle de chargement, peut être grandement atténué en choisissant un angle α du plan incliné 14 aussi faible que possible, normalement autour de 5°. Généralement, l'angle α est choisi en fonction du diamètre ou de la masse des barres; il est d'environ 3,5° pour les barres de grand diamètre et d'environ 15° pour les barres de faible masse et de petit diamètre et pour les barres de section hexagonale.

De toute façon, ce second choc est de nature plus faible que le choc d'une barre au-dessus d'une butée de retenue dans le V de la coulisse de chargement chez les ravitailleurs connus, et il peut encore être atténué en prévoyant des freins, connus en soi, sur le plan incliné 14.

Le ravitailleur qui vient d'être décrit à titre d'exemple, n'est pas limité à cette description. Il peut être modifié dans le cadre de la portée des revendications selon les connaissances de l'homme du métier; ces modifications concernent par exemple le choix des matériaux. Les cylindres pneumatiques ou hydrauliques 32 ainsi que les dispositifs de réglage vertical des butées 66 peuvent être remplacés par d'autres dispositifs moteurs connus, etc. En outre, il n'est pas nécessaire que le dispositif de réglage de l'inclinaison des doigts de retenue soit fixé à une des butées 66; il peut également être actionné séparément par une des vis sans fin tournant dans les manchons 68, ou bien il peut avoir son propre entraînement, couplé de préférence à la chaîne 72. De toute manière, il suffit que les doigts de retenues soient couplés au dispositif de réglage de la hauteur finale des coulisses de chargement.

En résumé, la construction du ravitailleur comme elle a été décrite ci-dessus évite tout choc de barres contre la coulisse de chargement et rend en plus la machine plus performante vu l'adaptation semi-automatique au diamètre variable des barres à charger.

## Revendications

1. Ravitailleur de barres courtes pour machine-outil, comprenant (a) un dispositif de chargement de barres, comportant (a1) une pluralité d'éléments de retenue arrangés en parallèle et alignés les uns aux autres pour retenir une pluralité de barres posées sur un plan incliné, et (a2) des coulisses de chargement, (b) un dispositif de centrage des barres selon un axe d'alignement par rapport à la machine-outil, et (c) un dispositif d'avancement des barres dans ladite broche, caractérisé en ce que les dits éléments de retenue sont des doigts (42) ayant une telle forme et une telle position qu'ils continuent à retenir une barre (60) saisie par les coulisses de chargement (28) lorsque celles-ci font leur mouvement vertical ascendant, de telle manière ce que la barre (60) reste en contact, pendant son chargement, avec deux génératrices porteuses (30A, 42B), l'une située sur le dit doigt (42) et l'autre sur la coulisse de chargement (28), substantiellement jusqu'à ce que la barre a atteint sa position finale dans ledit axe d'alignement (C).

2. Ravitailleur selon la revendication 1, caractérisé en ce les doigts de retenue (42) sont solidement fixés à un arbre (38) disposé horizontalement dans le socle (10) du ravitailleur, en dehors de la course des coulisses de chargement (28) et au-dessous du magasin (12) des barres, de manière que l'extension longitudinale du doigt de retenue (28) est dirigée depuis ledit arbre (38) généralement vers l'axe de l'alignement (C), ledit arbre (38) étant logé pour rotation dans des paliers (40).

3. Ravitailleur selon la revendication 2, caractérisé en ce que les doigts de retenue (42) sont fixés à des distances horizontales à peu près égales sur l'arbre (38), les deux doigts centraux (42', 42") étant disposés à une distance plus petite et connectés l'un à l'autre par des entretoises (50).

4. Ravitailleur selon les revendications 1 et 2, caractérisé en ce qu'il comporte des butées (66) limitant le mouvement ascendant vertical du dispositif de chargement, la position verticale des butées (66) étant réglable en fonction du diamètre des barres, un dispositif de réglage de l'inclinaison desdits doigts de retenue (42) étant associé à au moins une de ces butées ou à l'entraînement du réglage vertical des butées.

5. Ravitailleur selon les revendications 2 et 4, caractérisé en ce que les deux doigts centraux (42', 42") sont disposés à une distance plus petite et sont connectés l'un à l'autre par des entretoises (50), qu'ils comportent tous les deux une fente de commande oblongue (46) généralement dirigé dans le sens de la longueur desdits doigts (42), et que la fente est reliée à au moins une desdites butées (66) par une tige de commande (78) généralement verticale dont la partie inférieure est solidement reliée à la butée (66) et dont la partie terminale supérieure, passant par l'interstice entre lesdits deux doigts de retenue centraux (42', 42"), est traversée d'une goupille (48) dépassant la tige de commande et pénétrant dans la fente desdits deux doigts de retenue.

6. Ravitailleur selon les revendications 3 et 5, caractérisé en ce que le dispositif de réglage de l'inclinaison des doigts de retenue, constitué par les doigts de retenue (42), leur fente de commande (46) et la tige de commande (78), est agencé et dessiné de telle sorte que la ligne de contact horizontale entre la première barre (60) déposé sur ledit plan incliné (14) et la prochaine barre (62) est toujours situé dans le plan formé par l'arête verticale arrière (28B) des coulisses de chargement (28), indépendamment du diamètre des barres.

7. Ravitailleur selon la revendication 5, caractérisé en ce que la position de la tige de commande par rapport à la butée (66) comporte un réglage fin (vis 82).

8. Ravitailleur selon les revendications 1 et 6, caractérisé en ce que l'angle d'inclinaison (α) dudit plan incliné par rapport à l'horizontale est compris entre 3,5° et 15° et est de préférence d'environ 5°.

9. Ravitailleur selon la revendication 8, caractérisé en ce que l'inclinaison du plan incliné vers l'horizontale est réglable.

10. Ravitailleur selon la revendication 1, caractérisé en ce que l'angle (β) renfermé par les deux faces de contact (30A, 30B) de la coulisse de chargement (28) est d'environ 120°.

11. Ravitailleur selon la revendication 1, caractérisé en ce qu'il est adapté au chargement des barres ayant un diamètre compris entre 6 et 120 mm.
